# EUROPÄISCHE PATENTANMELDUNG

(11) **EP 1 182 547 A1**
(43) Veröffentlichungstag der Anmeldung: **27.02.2002**
(21) Anmeldenummer: 00118436.5
(22) Anmeldetag: 24.08.2000
(51) Int. Cl.: G06F 9/46, G06F 9/40

(54) **Programmkopplungsmethode**

(71) Anmelder: Wincor Nixdorf GmbH & Co KG, 33106 Paderborn (DE)
(72) Erfinder: Dresselhaus, Albert, 33758 Schloss Holte (DE); Wegener, Reinhold, 59602 Rüthen (DE)

(57) **Zusammenfassung**

Methode zum Aufruf einer Funktion einer funktionsorientierten Programmiersprache wie C aus einer objektorientierten Programmiersprache wie JAVA, wobei durch rekursiven Aufruf einer Serialisierungmethode (toX) die Inhalte der die in der Struktur verwendeten Felder in einer einem Formatstring entsprechenden Reihenfolge in einem Datenstring abgelegt und dieser durch eine Packfunktion in ein Speicherabbild der Struktur umgewandelt werden und die Funktion der funktionsorientierten Programmiersprache mit dem Speicherabbild als Parameter aufgerufen wird.

## Beschreibung

Die Erfindung betrifft die Kopplung unterschiedlicher Programmiersprachen, insbesondere den Aufruf von Unterprogrammen in funktionsorientierten Programmiersprachen aus objektorientierten Programmiersprachen und umgekehrt.

Es sind eine Vielzahl von Programmiersystemen bekannt, mit deren Hilfe Programme für Datenverarbeitungsanlagen erstellt werden können. Weithin und im folgenden als Beispiel benutzt sind die Programmiersprachen JAVA und C. Zu der abstrakten Spezifikation der Programmiersprache gehören Übersetzer, die Programmcode erzeugen. Diese Übersetzer sind damit Werkzeuge, mit denen die Computer für ein bestimmtes Verhalten eingerichtet werden.

Mit der Einführung einer neuen Programmiersprache, hier JAVA, stellt sich jeweils das Problem, Unterprogramme der jeweils anderen Programmiersprache aufrufen zu können. Allgemein bekannt sind Techniken, die die Aufrufkonventionen verschiedener Programmiersprachen-Implementationen umsetzen, sofern die Programmiersprachen ausreichend ähnlich sind. Beispielsweise ist gemischte Verwendung von C und Pascal bekannt, wobei meist ein Schlüsselwort die Funktion bzw. Prozedur entsprechend kennzeichnet. Solange es sich um einfache Variable handelt, ist diese Technik einfach und bekannt. Größere Probleme ergeben sich bei der gemeinsamen Benutzung von Strukturen. Hier liegt die Lösung meist darin, daß eine gemeinsame Darstellung im Speicher möglich ist bzw. nach Kenntnis der Speicherstruktur ein Paar von Beschreibungen manuell erstellt wird, die dieselbe Speicherstruktur darstellen.

Besondere Probleme stellen sich jedoch bei der Kopplung von objektorientierten Sprachen wie JAVA und funktionsorientierten Sprache wie C, wenn Strukturen betroffen sind. Denn JAVA kennt keine Strukturen wie C; die beste Annäherung besteht in der Verwendung von, ggf. verschachtelten, Objekten.

In JAVA ist bereits eine Schnittstelle vorgesehen, um insbesondere C-Programme aufzurufen. Diese Schnittstelle wird 'JAVA Native Interface' genannt und mit JNI abgekürzt. Eine Beschreibung ist insbesondere unter
http://java.sun.com/docs/books/
tutorial/native1.1/index.html
zu finden. Darin wird ausdrücklich darauf hingewiesen, daß die C-Funktionen angepaßt werden müssen: 'While "in the real world" you probably have existing C functions that you wish to integrate with Java programs, you will still need to modify the signatures for these C functions to work with the JNI.' Es ist also nicht ohne weiteres möglich, eine vorgegebene C-Funktion aus JAVA heraus aufzurufen, ohne eine üblicherweise als 'wrapper function' bezeichnete Hilfsfunktion für jede so aufzurufende Funktion zu erstellen. Insbesondere ist die Verwendung von Strukturen in C als Parameter jeweils individuell umzusetzen, da es Strukturen in JAVA nicht gibt.

Es ist also Aufgabe der Erfindung, vorgegebe C-Funktionen, deren Parameter vorgegebene C-Strukturen sind, aus JAVA heraus aufzurufen, ohne für jede C-Funktion und C-Sruktur individuell und manuell eine 'wrapper function' zu erstellen.

Die Lösung dieser Aufgabe wird nunmehr an Hand eines Beispiels beschrieben, welches weiterhin die Programmiersprachen JAVA und C verwendet. Die Darstellungen der Programme enthalten am Anfang einer Zeile eine Zeilennummer, die lediglich zur Bezugnahme dient.

Die Lösung verwendet dabei eine Technik, die als Serialisierung bezeichnet wird und die unter
http://java.sun.com/docs/books/
tutorial/essential/io/serializing.html
beschrieben ist. Bei dieser sind in jeder Klasse jeweils eine Methode zum Serialisieren und eine für die Gegenrichtung vorhanden. Die Methode zum Serialisieren heißt per Konvention 'writeObject' und wird rekursiv auf alle Datenelemente einer Klasse angewendet. Die Rekursion übernimmt dabei das Laufzeitsystem 'JAVA Virtual Machine', das aus den zu serialiserenden Objekten dynamisch, d.h. erst während der Laufzeit, die zu bearbeitenden Felder ermittelt, diese auf kanonische Art ausgibt, wenn es sich um Basistypen handelt und, sofern es Verweise auf Objekte sind, rekursiv behandelt.

Im folgenden wird zunächst an Hand eines einfachen Beispiels eine Serialsierung beschrieben, wie sie in der Erfindung verwendet wird. Als Basiselemente werden eine Ganzzahl von dem Typ 'Integer' und eine Fließkommazahl vom Typ 'Float' verwendet. Beide werden als Klassen definiert: 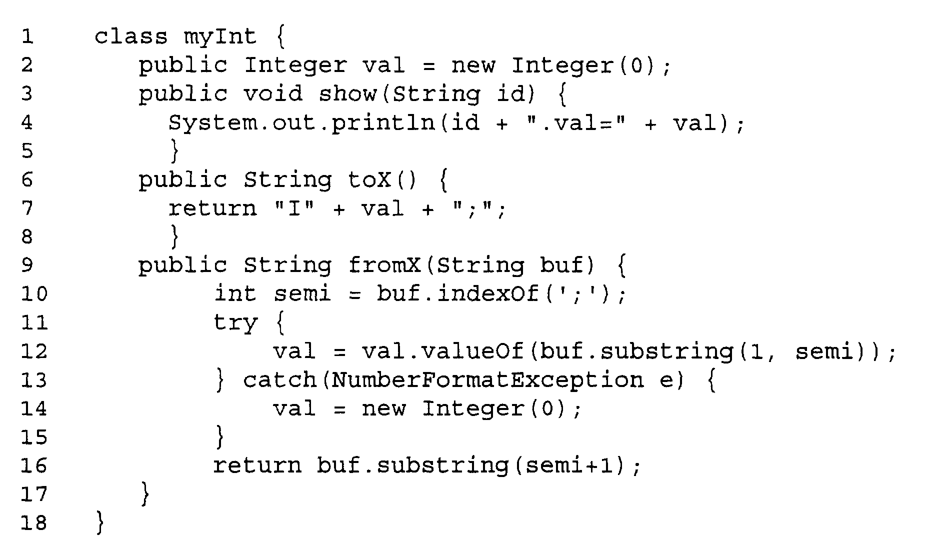 In Zeile 1 wird die Klasse 'myInt' durch den nachfolgenden Programmtext definiert. Sie umfaßt in Zeile 2 einen Speicherplatz 'val' aus der Klasse 'Integer'. Jede Klasse in dieser Anwendung kennt drei Methoden, nämlich 'show' in Zeile 3, 'toX' in zeile 6 und 'fromX' in Zeile 9. 'show' dient nur zur Anzeige des Wertes für Testzwecke.

Die Methode 'toX' dient der Serialisierung. Sie gibt als String den Wert in einer kanonischen Form zurück, bei der auf einen Indikator, hier "I", der Wert in Dezimalziffern folgt, der durch ein Semikolon abgeschlossen ist.

Die Methode 'fromX' erwartet einen String, der mit einem Element in genau diesem Format beginnt, d.h. mit einem Indikator, der immer "I" sein sollte, dem Wert in Dezimalziffern, und einem Semikolon. Die Position des letzteren wird in Zeile 10 ermittelt. 'formX' gibt den Rest der Zeichenkette zurück, nachdem der Wert für das Objekt entnommen und in 'val' abgelegt wurde.

Die beiden Funktionen 'toX' und 'fromX' sind daher invers zueinander; insbesondere bewirkt
x.fromX(x.toX())
wobei x ein Objekt der Klasse 'myInt' ist, daß der Wert durch 'toX' ausgelesen und durch 'fromX' wieder gesetzt wird.

Entsprechend ist die Klasse 'myFloat' definiert: 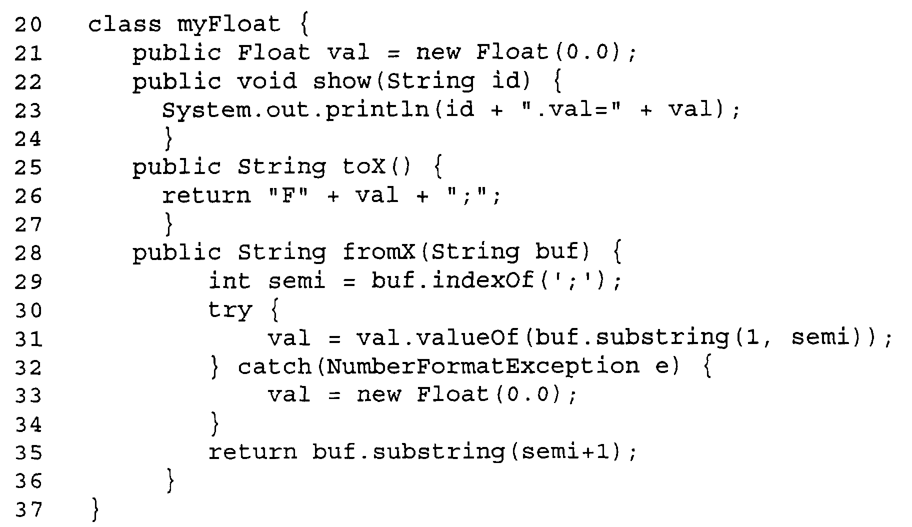 Angenommen, in C liegt eine einfach Struktur vor: 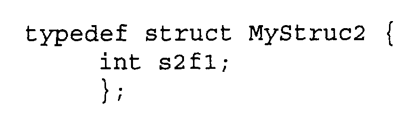 Diese wird in folgende JAVA-Klasse umgesetzt: 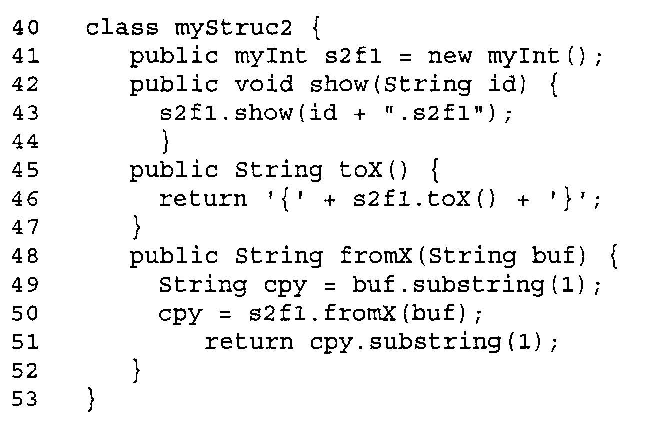 In Zeile 41 wird das Datenfeld s2f1 definiert; die Methode 'show' dient der Anzeige des Werts.

Die Methode 'toX' erzeugt den Wert, einfasst in geschweifte Klammern, als String. 'fromX' stellt den Rückweg bereit. Beide Methoden, wie auch die Methode 'show', verwenden rekursiven Aufruf, um die entsprechenden Funktionen für die Strukturelemente auszuführen.

Mit diesen Elementen wird nun eine etwas komplexere Struktur in C aufgebaut: 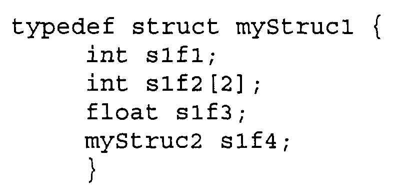 Das entsprechende Äquivalent in JAVA lautet: 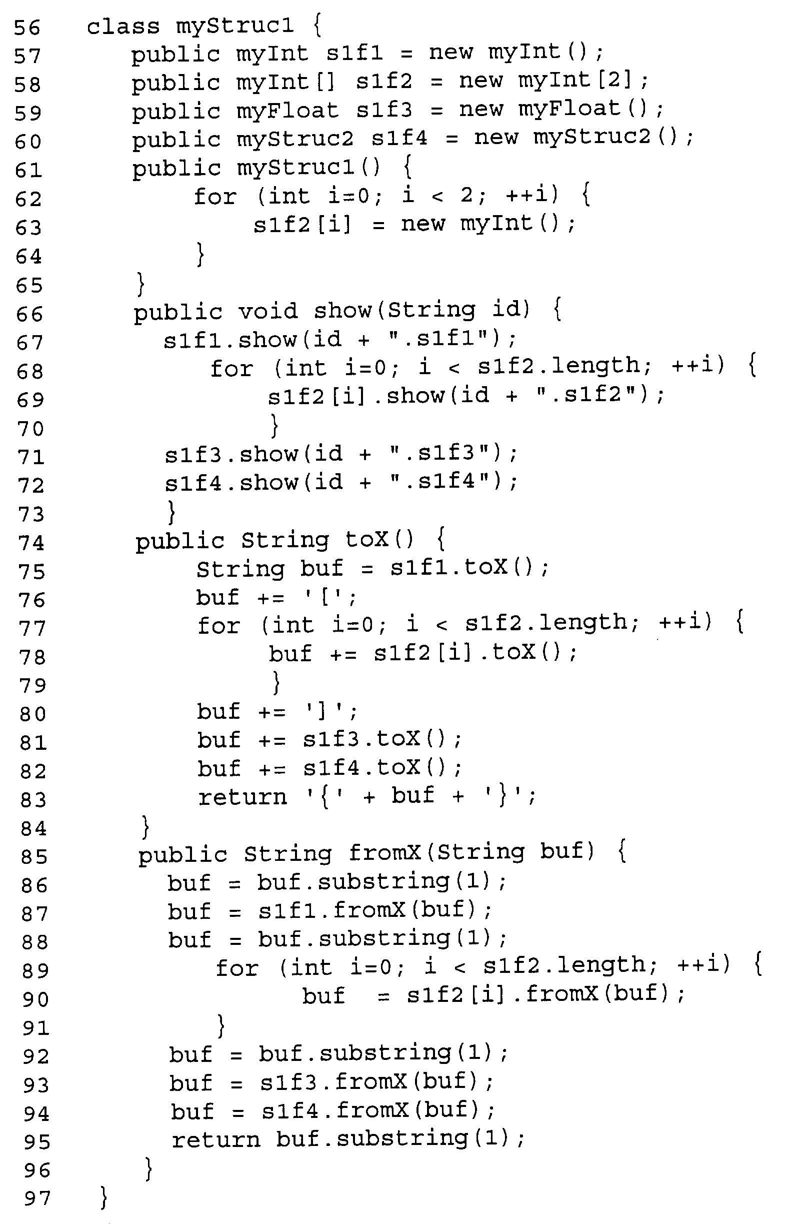 Für jedes Feld der Struktur wird in den Methoden 'toX' und 'fromX' durch rekursiven Aufruf der entsprechenden Methoden der Felder eine Umwandlung in bzw. von einer kanonischen linearen Darstellung erreicht. Für das Array 'slf2' muß entsprechend über die Elemente iteriert werden, wie dies in Zeile 78 und 90 erfolgt. Auch hier wird die Struktur durch geschweifte Klammern markiert; das Array wird durch eckige Klammern eingefaßt.

Ferner ist für dieses Beispiel noch eine Klasse 'CallC' vorgesehen:

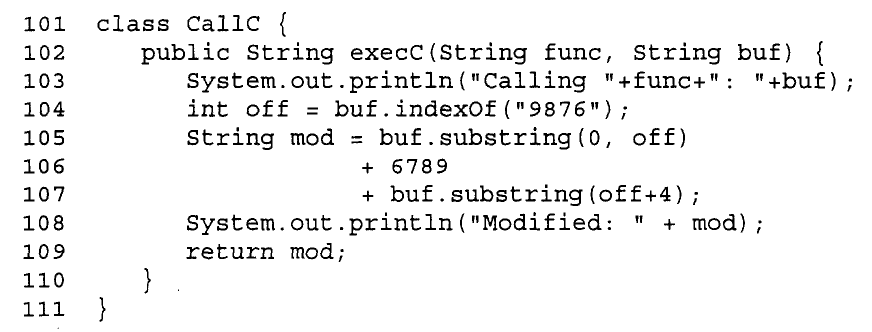

Diese Klasse enthält lediglich die Methode 'execC', die die Argumente anzeigt und die übergebene Zeichenkette modifziiert, indem die Zahl "9876" durch "6789" ersetzt wird. Diese Methode steht stellvertretend für eine Aufruf einer Funktion in C, wie später genauer erläutert wird.

Um diesen JAVA-Code zur Demonstration ablaufen lassen zu können, wird noch ein Hauptprogramm 'main' in der Klasse 'sample' definiert: 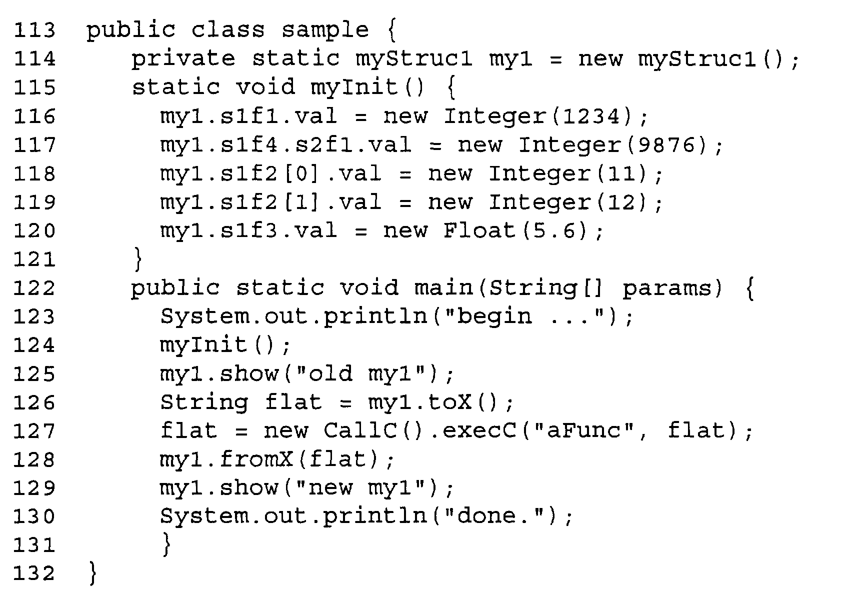 Dabei wird in Zeile 115-121 zunächst das Objekt 'my1' der Klasse 'myStruc1' mit Beispiels-Werten besetzt. Diese erfolgt der Übersichtlichkeit halber hier durch direkten Zugriff auf die Felder der Objekte. In einer realistischen Anwendung würden hierzu passende Methoden verwendet werden, deren Formulierung jedoch von den Inhalten der Anwendung geprägt ist und daher hier ohne Bedeutung ist.

In Zeile 124 wird das in Zeile 114 erstellte Objekt initialisiert. In Zeile 125 werden die Werte angezeigt. In Zeile 126 wird das Objekt durch den - rekursiven - Aufruf von 'toX' in der Variablen 'flat' als kanonische linere Darstellung erzeugt. In Zeile 127 wird die Methode 'execC' aufgerufen, die normalerweise als C-Funktion über das JNI aufgerufen, aber hier mit einer JAVA-Klasse simuliert wird und eine evtl. veränderte Struktur in linearisierter Normalform zurückgibt, die in der Variablen 'flat' verbleibt. Mittels dieses Strings wird durch - rekursiven - Aufruf von 'fromX' nunmehr diese, möglicherweise veränderten, Werte in den Objekten abgelegt.

Man sieht, daß die Funktion 'toX' den String rekursiv aufbaut und 'fromX' ihn in gleicher Art abbaut.

Ersichtlich können die Methoden 'fromX' und 'toX' durch ein Programm automatisch aus den entsprechenden Strukturdefinitionen erzeugt werden. Für jedes Element wird rekursiv die jeweilige Methode aufgerufen. Bei 'toX' wird deren Ausgabe an den String angehängt; bei 'fromX' stellt deren Ergebnis den weiter zu bearbeitenden Rest dar.

Nimmt man alle Programmzeilen von 1 bis 132 zu einem JAVA-Programm zusammen, übersetzt dieses und führt es aus, so erscheint folgende Ausgabe: 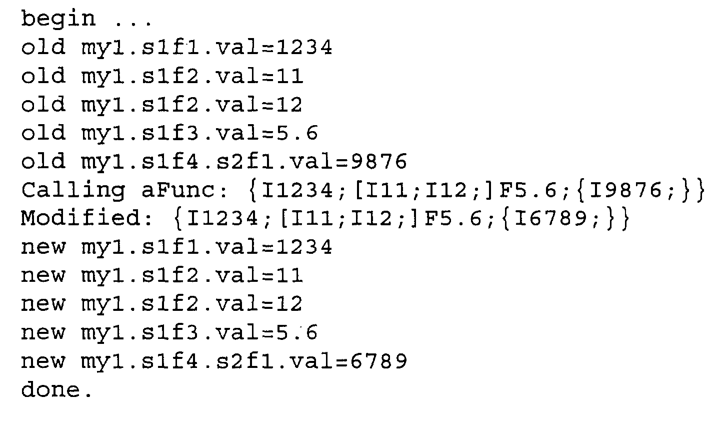 Man erkennt deutlich die kanonische Darstellung "{I1234;[I11;I12;]F5.6;{19876;}}" sowohl der Struktur als auch der Werte des Objekts 'myStruc1' entsprechend der C-Struktur 'myStruc1'.

Bislang werden jedoch die Formatindikatoren "I", "F", "{" und "}" gar nicht verwendet. Das Semikolon ist hier nur der Übersichtlichkeit halber eingefügt; es könnte weggelassen werden. Auch sind andere Darstellungen des Strings möglich. Da Strings in JAVA als Unicode mit 16 Bit pro Zeichen abgelegt werden und die Methoden der Klasse 'String' nicht unbedingt sehr schnell sind, könnte eine Optimierung darin bestehten, ein vorab angelegtes Byte-Array zu verwenden und dieses mit Binärdaten zu füllen. Auch ist statt der Zahldarstellung zur Basis 10 selbstverständlich auch eine zur Basis 16 oder 36 möglich. Ob sich solche Optimierungen in Bezug auf den Verlust an Portierbarkeit und Wartbarkeit lohnen, muß in jedem Einzelfall konkret durch Messungen belegt und entschieden werden. Diese und ähnlich Optimierungen, die dem Fachmann ohnehin bekannt sind, werden daher im folgenden nicht mehr erwähnt.

Mit den bislang dargestellten Mitteln ist nunmehr erreicht, daß durch die Methode 'toX' sämtliche Datenfelder linearisiert vorliegen und mit der Methode 'fromX' wieder abgelegt werden können. Diese Methoden stellen also eine spezielle Ausprägung der bekannten Serialsierungsfunktionen dar und könnten auch an deren Stelle treten.

Im Gegensatz zu der aus JAVA bereits bekannten Serialsierungsfunktion ist jedoch zunächst festzustellen, daß die in der vorliegenden Erfindung verwendete Serialsierungsfunktion eine bestimmte Reihenfolge der Felder erzeugt, nämlich die Reihenfolge, in der die Felder in der Struktur definiert sind. Ferner wird durch die Serialisierung das Format der Struktur gemäß der funktionalen Sprache C in eine sehr einfachen Form dargestellt. Die in JAVA bereits vorhandene Serialisierung hingegen speichert zwar Information zu den Objekten ab, enthält aber natürlicherweise kein Strukturinformation bezüglich der zugeorndeten C-Strukturen.

Diese linearisierte, mit Typindikatoren versehene Speicherform der Inhalte kann nun unabhängig von der Definition der Strukturen in ein Speicherlayout umgesetzt werden, daß der jeweiligen C-Struktur entspricht. Hierzu wird ein C-Progamm verwendet, das die Zeichenkette - vorzugsweise auch rekursiv - analysiert, den Typindikator auswertet und entsprechend weiterarbeitet. Kennzeichnet der Typindikator eine einfache Variable, so werden die folgenden Ziffern umgewandelt und in eine Speicherfeld der entsprechenden Länge und Ausrichtung binär abgelegt. Kennzeichnet der Typindikator eine Struktur, so wird in einigen Implementationen eine Ausrichtung, häufig auf Doppelwortgrenze, notwendig sein, auch wenn die Struktur nur aus Bytes besteht, die keine Ausrichtung benötigen. Diese Bearbeitung ist spezifisch für das jeweilige Compilersystem für die Sprache C und entspricht den aus dem Compilerbau hinlänglich bekannten Techniken, die ggf. aus dem Quellcode des entsprechenden Compilers übernommen werden.

Ein Beispiel für eine Packfunktion könnte wie folgt aussehen:

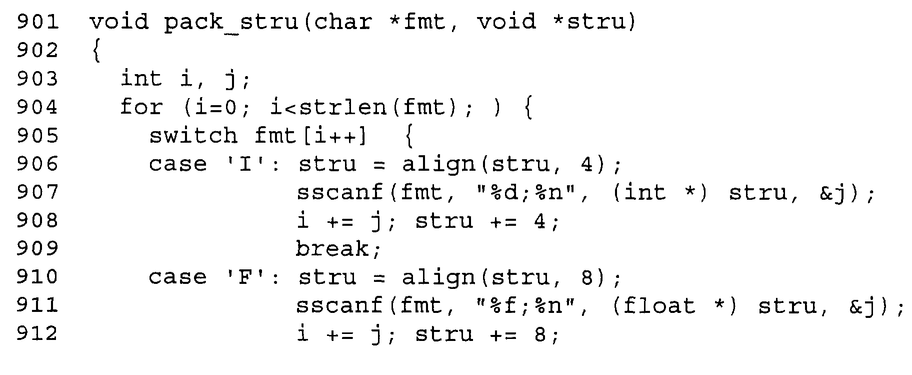

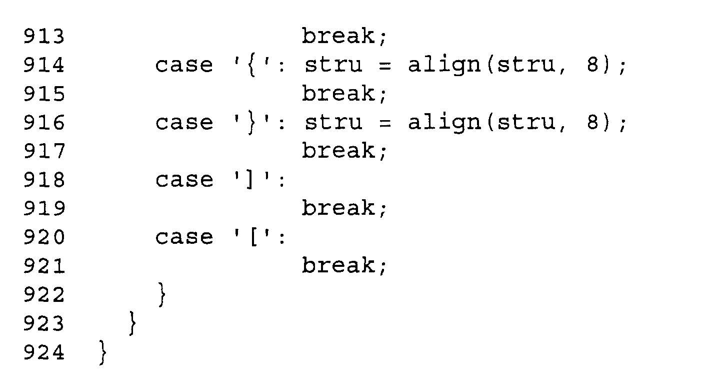

Die Funktion 'pack_stru' hat zwei Parameter, einen Zeiger auf den kombinierten Format- und Datenstring sowie den Zeigen auf einen (ausreichend großen) Speicherbereich, in dem die Struktur aufzubauen ist. Dieser ist typunabhängig als 'void*' definiert. Die Schleife von Zeile 904 bis 923 arbeitet nun die den kombinierten Format- und Datenstring ab. Die Funktion 'align' in den Zeilen 906, 910, 914 und 916, die eine Ausrichtung der Adresse auf ein vielfaches des zweiten Paramters durchführt, ist hier nicht gezeigt, da sie stark von dem jeweiligen Compilersystem abhängig ist. In den Zeilen 907 und 911 wird über die Bibliotheksfunktion 'sscanf' der Wert aus dem String 'fmt' entnommen und in dem Speicherbereich abgelegt, der durch den Zeigen 'stru' adressiert ist, wobei der formalen Korrektheit halber hier eine Typanpassung erfolgt. Die Anzahl der bearbeiteten Zeichen wird ausgegeben und zum Weiterschalten des Format- und Datenstrings verwendet. Die 'array'-Indikatoren '[' und ']' sind hier ohne Wirkung; auch dies ist abhängig von der jeweiligen Implementation.

Es wird also, wie durch die Methode 'execC' aus der Klasse 'CallC' angedeutet, der Name der aufzurufenden C-Funktion und eine Zeichenkette übergeben, die die der C-Funktion mitzugebenden Struktur codiert enthält. Die Methode 'execC' wird über das JNI als C-Funktion aufgerufen und wandelt die Zeichenkette nunmehr, wie dargestellt, in das der Struktur entsprechend Speicherformat um. Sodann wird die im ersten Parameter angegebene C-Funktion aufgerufen und ein Zeiger auf die Speicherstruktur übergeben.

Als Resultat nach Rückkehr der Funktion können die Felder der Speicherstruktur geändert sein. Daher erzeugt die Funktion 'execC' aus der Speicherstruktur wieder die kanonische Darstellung. Hierzu wird die übergebene Zeichenkette verwendet, die ja die Speicherstruktur beschreibt, und erneut abgearbeitet. Die Typindikatoren werden kopiert und jeweils anschließend der Wert der Speicherstelle eingefügt bzw. der vorhandene Wert ersetzt. Das Weiterschalten in der Speicheradresse erfolgt gemäß denselben Regeln für Länge und Ausrichtung wie bei deren Erzeugung. Werden die Zahlenwerte mit fester (Maxial-) Länge abgelegt, so kann einfach ein Überschreiben erfolgen.

Die Funktion 'execC' gibt also die linearisierte Darstellung der Werte der Speicherstruktur zurück. Diese wird dann im Anschluß daran mit der Methode 'fromX' wieder rekursiv analysiert und zum Aktualisieren der Werte der Felder in den Objekten verwendet.

In dem bislang gezeigten Beispiel werden die Typindikatoren und die Werte gemischt in demselben String abgelegt. Es ist selbstverständlich auch möglich, beide getrennt in zwei Strings zu erzeugen. Aus
{I1234; [I11;I12;]F5.6;{19876;}}
wird dann der Formatstring
{I[II]F{}}
und der Datenstring
1234;11;12;5.6;9876;

Dies hat den Vorteil, daß nach Rückkehr der aufgerufenen Funktion im Rahmen der Funktion bzw. Methode 'execC' lediglich an Hand der codierten Strukturbeschreibung "{I[II]F{}}" die Werte der Strukturelemente als neue Zeichenkette assembliert werden müssen und hierzu der Puffer, in dem die Eingangswerte enthalten waren, von vorn überschrieben werden können. Im übrigen kann in diesem Fall die Strukturinformation auch statisch bereitgestellt werden. Dies ist insbesondere dann der Fall, wenn, wie bevorzugt und oben dargestellt, die Serialsierungs- und Deserialisierungsmethoden 'toX' und 'fromX' aus der Beschreibung der C-Struktur automatisch erzeugt werden. Die Erstellung des Datenstrings wird damit effizienter.

Die beschriebene Methode kann auch verwendet werden, um eine JAVA-Methode aus eine C-Funktion heraus aufzurufen. Hierzu kann der Formatstring entweder statisch bereitstehen oder durch Aufruf der Serialisierungsmethode ad hoc erstellt werden. Im letzten Fall muss die Instantiierung und Initialsierung der benötigten Objekte vorgezogen werden. Anhand des Formatstrings kann nunmehr die C-Struktur durch die Entpackfunktion in die serielle Form umgesetzt werden. Spätestens jetzt müssen die benötigten Objekte instantiiert und initialsiert werden. Die hierzu benötigten Aufrufe sind in dem JNI vorgesehen. Desgleichen wird über in dem JNI vorgesehene Mittel zunächst die Deserialisierungsmethode 'fromX' des der Struktur entsprechenden Objekts aufgerufen und sodann die letztendlich aufzurufende JAVA-Methode irgendeines Objekts, das primär von den den Strukturen zugeordneten Objekten unabhängig ist. Nach Rückkehr wird in der Regel der entsprechende Vorgang invers bzw. dem ersten Teil beim Aufruf von C aus JAVA entsprechend ablaufen.

## Patentansprüche

1. Methode zum Aufruf einer Funktion einer funktionsorientierten Programmiersprache (C), wobei die Funktion eine Struktur als Parameter erwartet, aus einer objektorientierten Programmiersprache (JAVA), wobei den Feldern der Struktur entsprechende Klassen in JAVA zugeordnet sind, mit folgenden Schritten:
- eine die Struktur beschreibende Zeichenkette wird in einem Formatstring bereitgestellt,
- durch rekursiven Aufruf einer Serialisierungmethode (toX) werden die Inhalte der die in der Struktur verwendeten Felder entnommen und in einer dem Formatstring entsprechenden Reihenfolge in einem Datenstring abgelegt,
- eine Packfunktion wandelt den Datenstring unter Verwendung des Formatstrings in ein Speicherabbild der Struktur um,
- die Funktion der funktionsorientierten Programmiersprache wird mit dem Speicherabbild als Parameter für die Struktur aufgerufen.

2. Methode nach Anspruch 1, mit folgenden weiteren Schritten:
- eine Entpackfunktion wandelt das Speicherabbild unter Verwendung des Formatstrings in einen Datenstring um,
- durch rekursiven Aufruf einer Deserialisierungmethode (fromX) werden die in der Struktur verwendeten Felder in einer dem Formatstring entsprechenden Reihenfolge aus dem Datenstring entnommen und in den Feldern der Objekte abgelegt.

3. Methode nach Anspruch 1 oder 2, wobei der Datenstring und der Formatstring zu einem gemeinsamen String gemischt sind, der mittels der Serialsierunsmethode erzeugt wird.

4. Methode zum Aufruf einer Methode einer objektorientierten Programmiersprache (JAVA) als eine Funktion einer funktionsorientierten Programmiersprache (C), wobei in dem Aufruf der Funktion eine Struktur als Parameter übergeben wird und den Feldern der Struktur entsprechende Klassen in JAVA zugeordnet sind, mit folgenden Schritten:
- das der Struktur entsprechende Objekt einschließlich benötigter Unterobjekte wird erzeugt,
- eine die Struktur beschreibende Zeichenkette wird in einem Formatstring bereitgestellt,
- eine Entpackfunktion wandelt das Speicherabbild unter Verwendung des Formatstrings in einen Datenstring um,
- durch rekursiven Aufruf einer Deserialisierungmethode (fromX) werden die in der Struktur verwendeten Felder in einer dem Formatstring entsprechenden Reihenfolge aus dem Datenstring entnommen und in den Feldern der Objekte abgelegt,
- die Methode wird aufgerufen.

5. Methode nach Anspruch 4, mit folgenden weiteren Schritten:
- durch rekursiven Aufruf einer Serialisierungmethode (toX) werden die Inhalte der die in der Struktur verwendeten Felder entnommen und in einer dem Formatstring entsprechenden Reihenfolge in einem Datenstring abgelegt,
- eine Packfunktion ersetzt unter Verwendung des Formatstrings in dem Speicherabbild der Struktur die Felder aus den in dem Datenstring vorhandenen Werten.

6. Methode zur Erstellung der für die Durchführung der vorherigen Methoden benötigten Programme, bei der aus der in der der funktionsorientierten Programmiersprache beschriebenen Struktur zumindest die Programmtexte der Serialisierungs- bzw. Deserialisierungsmethoden erzeugt werden.
